# EUROPEAN PATENT SPECIFICATION

(11) **EP 0 546 498 B1**
(45) Date of publication and mention of the grant of the patent: **19.10.1994**
(21) Application number: 92120903.7
(22) Date of filing: 08.12.1992
(51) Int. Cl.: A47J 31/40, A47J 31/32

(54) **Beverage extracting device of vending machine**
Getränke-Aufbrühvorrichtung für Verkaufsautomat
Dispositif d'extraction pour automate de vente

(30) Priority: 09.12.1991 JP 101198/91 U
(43) Date of publication of application: 16.06.1993
(73) Proprietor: SANDEN CORPORATION, Isesaki-shi Gunma, 372 (JP)
(72) Inventor: Kawada, Kazuki, Isesaki-shi, Gunma, 372 (JP)
(74) Representative: Prüfer, Lutz H., Dipl.-Phys.

(56) References cited:
- EP-A- 0 404 604
- JP-U- 2 077 791
- US-A- 4 506 596

## Description

The present invention relates to a beverage extracting, device of a vending machine for extracting beverage by filtering mixture liquid of hot water and material powder with a filter.

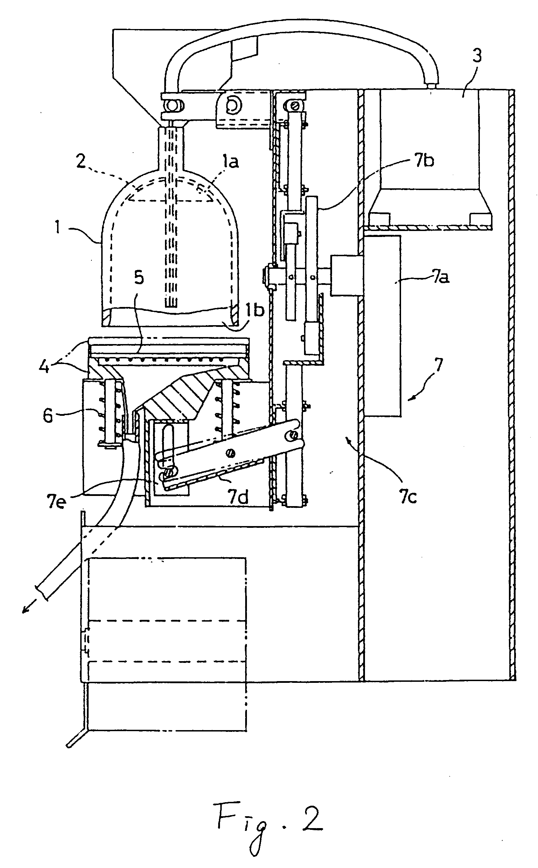

A known beverage extracting device in the prior art is shown in Figure 2. Such a device is e.g. disclosed in Japanese Laid-Open Utility Model Publication No. 2-77791 or in document EP-A-404604.

In the illustrated beverage extracting device, 1 indicates a cylinder into which mixture liquid of hot water and material powder flows through an inlet port 1a, 2 indicates a valve for opening and closing the inlet port 1a of the cylinder 1, 3 indicates a pressure device for supplying pressurized air through an interior of the valve 2, 4 indicates a filter block which is provided at its upper portion with a filter 5 and is biased downward by a return spring 6, and 7 indicates a filter block drive mechanism which is operable to open and close the inlet port 1a by the valve 2 and moves the filter block 4 upward against a biasing force of the return spring 6.

When the beverage is to be extracting by this beverage extracting device, the filter block drive mechanism 7 is, operated to move the filter block 4 upward for closing a lower opening 1b of the cylinder 1. Thereafter, the mixture liquid flows through the inlet port 1a into the cylinder 1. After accumulating the mixture liquid in the cylinder, the valve 2 closes the inlet port 1a, and then the pressure device 3 operates to pressurize the interior of the cylinder 1. Thereby, the pressurized air acts to filter the mixture liquid through the filter 5 for extracting beverage.

The beverage extracting device thus constructed is provided with structures, which will be described below, for closing the cylinder 1 by the filter block driving mechanism 7.

A drive motor 7a of the filter block drive mechanism 7 operates to rotate a block cam 7b, so that a vertically extending block transmitting mechanism 7c moves downward. Thereby, a rotary lever 7d having one end engaged with the block transmitting mechanism 7c rotates upward, as indicated by imaginary line, and an elevator frame 7e engaging the other end of the rotary lever 7d moves upward. Owing to the upward movement of this elevator frame 7e, the filter block 4 mounted on the elevator frame 7e moves upward to close the lower opening 1b of the cylinder.

As described before, the beverage extracting device, in which the lower opening 1b of the cylinder 1 is closed by driving the drive motor 7a, requires an extremely high precision for closing the lower opening 1b.

Specifically, if a distance of the upward movement of the filter block 4 is excessively long and thus a pressing force between the edge of the lower opening 1b and the filter block 4 is excessively large, and overload is applied to the drive motor 7a, resulting in a trouble of the drive motor 7a. Meanwhile, if the pressing force against the cylinder 1 is excessively small, the mixture liquid leaks through a gap between the filter 5 and the cylinder 1 when the pressurized air is supplied into the cylinder 1.

Accordingly, precise design and work are required with respect to a peripheral configuration of the block cam 7b, a length of the block transmitting mechanism 7c, a length of the rotary lever 7d and others in order to obtain an appropriate pressig force.

The precise design and work of these parts and members, however, increase the manufacturing cost. Even if the high precision is achieved in these parts and members, an assembly error may be generated in the assembly steps, and thus the pressing force may fluctuate, which is disadvantageous in view of the assembly cost.

It is a primary object of this invention to provide a beverage extracting device of a vending machine, in which an appropriate pressing force can be obtained between a cylinder and a filter block, and breakage of parts can be prevented.

A beverage extracting device of a vending machine according to Claim 1 includes a vessel into which mixture liquid of hot water and material powder flows through an inlet port. A valve opens and closes the inlet port of the vessel. A pressure device supplies pressurized air into the vessel. A filter block is arranged below a lower opening of said vessel and is provided at its upper portion with a filter and is biased downward relative to the vessel by a return spring. A filter block drive mechanism comprises a rotary lever which is rotatably supported for up- and downward movement of its ends, one end being operable to move the filter block for closing the lower opening of the vessel by the filter. The mixture liquid in the vessel is forcedly filtered through the filter by an inner pressure in the vessel, which is generated by supplying the pressurized air into the vessel while closing the inlet port of the vessel by the valve and closing the lower opening of the vessel by the filter. A pressing spring mechanism is disposed between the one end of the rotary lever and the filter block. The pressing spring mechanism is operable to bias the filter block upward against biasing force of the return spring when the rotary lever rotates whereby said one end moves upward. In the embodiment according to claim 2, the vessel is a cylinder.

Figure 1 is a schematic view of a vending machine.

Figure 2 is a cross-sectional view of a conventional beverage extracting device of a vending machine.

Figure 3 is an elevational view of a beverage extracting device of a vending machine in accordance with this invention.

Figure 4 is a cross-sectional view of a beverage extracting device of a vending machine as shown in Figure 3.

Figure 5 is a perspective view of a major part of a beverage extracting device of a vending machine as shown in Figure 3.

Figure 6 is a cross-sectional view of a major part of a beverage extracting devie of a vending machine for describing an operation of its major part.

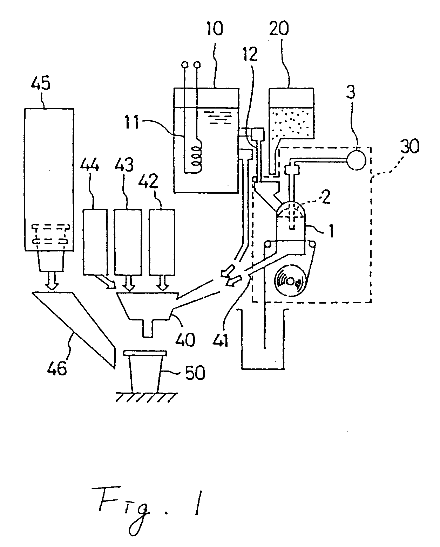

Figures 1 and 3-6 show an embodiment of a beverage extracting device of a vending machine according to one embodiment of this invention, and Figure 1 shows a schematic construction of the vending machine.

A numeral 10 indicates a hot water tank heated by a heater 11, 20 indicates a coffee powder box accomodating coffee powder, and 30 indicates a beverage extracting device, which extracts coffee liquid from mixture liquid prepared by stirring and mixing hot water supplied from the hot water tank 10 through a hot water supply pipe 12 and the coffee powder transferred from the coffee powder box 20. 40 indicates a mixing box, in which sugar and cream are supplied respectively from a sugar box 42 and a cream box 43 into the coffee liquid supplied through an extracted liquid pipe 41 so that hot coffee is supplied into a cup 50. 44 indicates a coffee box accomodating instant coffee, and 45 indicates a cup dispenser for dispensing the cup 50 through a cup chute 46.

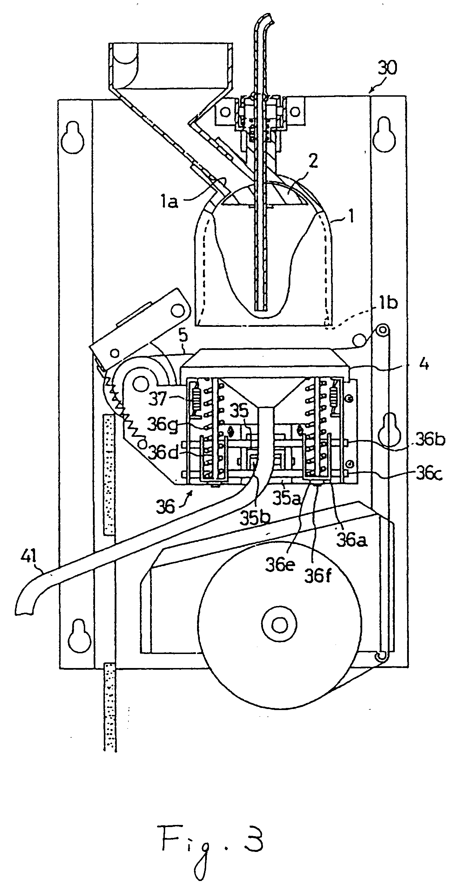

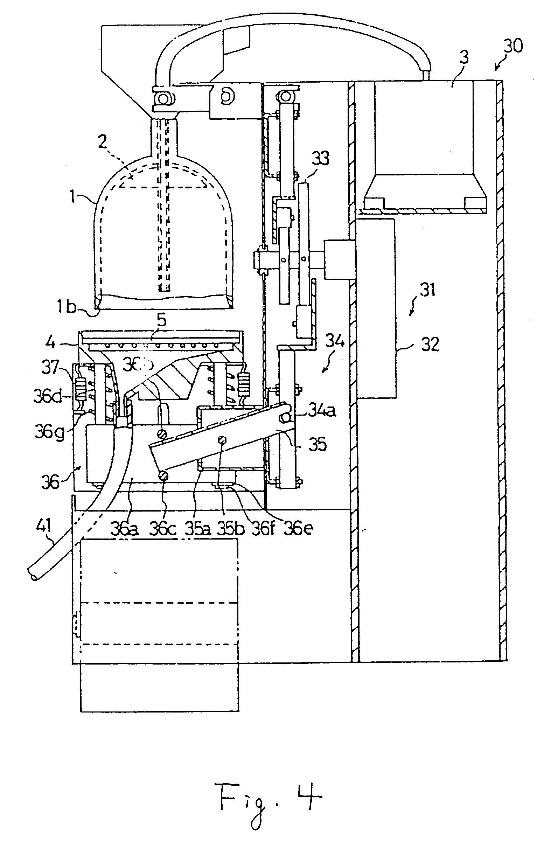

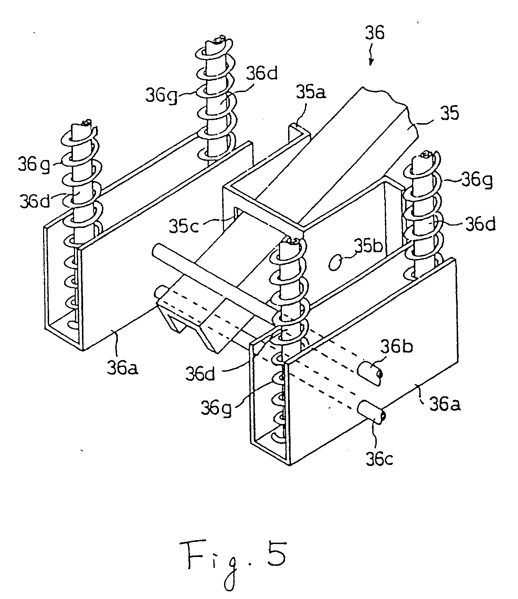

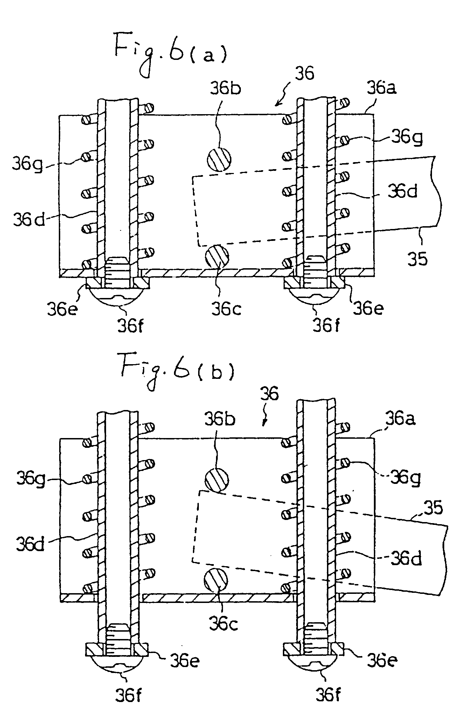

Figure 3 is an elevation of the beverage extracting device 30 disposed in the vending machine having the above construction. Figure 4 is a cross section of the beverage extracting device 30. Figure 5 is a perspective view showing a major part of the embodiment. Figure 6 is a cross section for showing an operation of the invention. In these figures, parts and portions having the same structures as those of the conventional beverage extracting device in Figure 2 are indicated by the same reference numerals.

In the beverage extracting device 30, 1 indicates a cylinder into which mixture liquid of hot water and material powder flows through an inlet port 1a, 2 indicates a valve for opening and closing the inlet port 1a of the cylinder 1, 3 indicates a pressure device for supplying pressurized air through an interior of the valve 2, and 4 indicates a filter block which is provided at its upper portion with a filter 5. Those parts and members have the same structures as those in the prior art.

The present invention has a constructional feature relating to a filter block drive mechanism 31 for raising the filter block 4.

Specifically, the filter block drive mechanism 31 is formed of a drive motor 32, a block cam 33 rotated by she drive motor 32, a block transmitting mechanism moved vertically by the block cam 33, a rotary lever 35 vertically rotated by the block transmitting mechanism 34, and a pressing spring mechanism for raising the filter block 4 in accordance with the upward rotation of the rotary lever 35.

The drive motor 32, block cam 33 and block transmitting mechanism34 have the same structures and the beverage extracting device in the prior art.

Meanwhile, the rotary lever 35 is rotatably supported for vertical movement through a shaft 35b by a block guide frame 35a having a nearly U-shaped section. The lever 35 has a front end portion, which projects through a hole 35c formed in a front plate of the block guide frame 35a. A rear end portion of the rotary lever 35 is engaged with a pin 34a provided at a lower position of the block transmitting mechanism34, similarly to the prior art. The front end portion of the lever 35 rotates upward when the block transmitting mechanism 34 lowers.

The pressing spring mechanism 36 has elevator frames 36s disposed at the laterally opposite sides of the block guide frame 35a, as shown in Figure 5. The elevator frames 36a have nearly U-shaped sections, when viewed in a longitudinal direction of the block guide frame 35a, and have side walls which support vertically spaced rods 36b and 36c. The front end portion of the rotary lever 35 is placed between the upper and lower rods 36b and 36c.

As shown in Figure 6 (a) and (b), vertical spring wound popes 36d are inserted into front and rear portion of each of the left and right elevator frames 36a. Each spring wound pipe 36d has a upper end fixed to the lower surface of the filter block 4, and lower end to which a stop screw 36f is attached with a washer 36e therebetween. The stop screw 36f prevents the elevator frame 36a from falling from the spring wound pipe 36d. Around each spring wound pipe 36d, there is wound a coil spring 36g disposed between the elevator frame 36 and the filter block 4, so that the filter block 4 is biased upward by an elastic force of the coil spring 36g when the elevator frame 36a rises.

37 indicated a return spring for biasing the filter block 4 downward. The return spring 37 moves the filter block 4 downward when the elevator frame 36a is not biased upward.

In the illustrated embodiment, the front end of the rotary lever 35 is located at a lower position during stoppage of the drive motor 32 of the filter block drive mechanism 31, as shown in Figures 3, 4 and 6 (a). In this state, the filter block 4 is pulled downward by the downward biasing force of the return spring 37, so that a space is formed between the lower opening 1b of the cylinder 1 and the upper surface of the filter block 4.

When the drive motor 32 of the filter block drive mechanism 31 is driven, the block cam 33 rotates to move the block transmitting mechanism 34 downward. Owing to this downward movement, the rotary lover 35 rotates clockwise from the position shown in Figures 4 and 6 (a), as shown in Figure 6 (b).

Owing to the operation of the filter block drive mechanism 31, the rod 36b of the pressing spring mechanism 36, which is located on the upper surface of the rotary lever 35, is lifted, as shown in Figure 6 (b), and thus, the elevator frames 36a held by the rod 36b move upward. In this operation, the upwardly moving force of the elevator frames 36 is transformed into the elastic force of the wound springs 36g, and the elastic force of the wound springs 36g serves to move the filter block 4 upward against the biasing force of the return spring 37 for closing the lower opening 1b of the cylinder 1.

As described above, the lower opening 1b of the cylinder 1 is closed, utilizing the elastic force serves as a damping force for the closed portions, in addition to the force for closing the lower opening 1b of the cylinder 1 is large to some extend, the filtration block drive mechanism 31 does not receive an overload, and thus is prevented from breakage. Further, the lower opening 1b can be reliably closed.

According to the invention, as described herein above, the operation of the filter block for closing the cylinder is achieved by the spring force of the pressing spring mechanism, so that the elastic force of the springs serves as the closing force to ensure reliable closure without a gap. Since the elastic force of the springs serves as the damping force for the closed portions, parts such as the cylinder and filter block drive mechanism are prevented from breakage.

## Claims

1. A beverage extracting device of a vending machine comprising a vessel (1) into which mixture liquid of hot water and material powder flows trough an inlet port, a valve (2) for opening and closing said inlet port of said vessel (1), a pressure device (3) for supplying pressurized air into said vessel (1), a filter block (4) which is arranged below a lower opening (1b) of said vessel (1) and provided at its upper portion with a filter (5) and biased downward relative to the vessel (1) by a return spring (37), a filter block drive mechanism (34) comprising a rotary lever (35) which is rotatably supported for up- and downward movement of its ends, one end being operable to move the filter block (4) for closing said lower opening (1b) of said vessel (1) by said filter (5), and whereby said mixture liquid in said vessel (1) is forcedly filtered through said filter (5) by an inner pressure in said vessel (1), which is generated by supplying said pressurized air into said vessel (1) while closing said inlet port (1a) of said vessel (1) by said valve (2) and closing said lower opening (1b) of said vessel (1) by said filter (5), and a pressing spring mechanism (36) to bias said filter block (4) upward against a biasing force of said return spring (37) characterized in that: said pressing spring mechanism (36) is disposed between said one end of said rotary lever (35) and said filter block (4), and is operable when said rotary lever (35) rotates whereby said one end moves upward.

2. Device according to claim 1, wherein said vessel is a cylinder (1).

## Patentansprüche

1. Getränkeextraktionsvorrichtung einer Verkaufsmaschine mit einem Gefäß (1), in das durch eine Einlaßöffnung eine Mischungsflüssigkeit aus heißem Wasser und Materialpulver fließt, einem Ventil (2) zum Öffnen und Schließen der Einlaßöffnung des Gefäßes (1), einer Druckvorrichtung (3) zum Zuführen von Druckluft in das Gefäß (1), einem Filterblock (4), der unterhalb einer unteren Öffnung (1b) des Gefäßes (1) angeordnet und an seinem oberen Abschnitt mit einem Filter (5) versehen und relativ zu dem Gefäß (1) durch eine Rückholfeder (37) abwärts vorgespannt ist, einem Filterblockantriebsmechanismus (34) mit einem Drehhebel (35), der drehbar für eine Aufwärts- und Abwärtsbewegung seiner Enden gelagert ist, wobei ein Ende zum Bewegen des Filterblockes (4) betätigbar ist, zum Schließen der unteren Öffnung (1b) des Gefäßes (1) durch den Filter (5) und wobei die Mischungsflüssigkeit in dem Gefäß (1) zwangsweise durch den Filter (5) durch einen inneren Druck in dem Gefäß (1) gefiltert wird, der erzeugt wird durch Zuführen der Druckluft in das Gefäß (1), während die Einlaßöffnung (1a) des Gefäßes (1) durch das Ventil (2) geschlossen wird und die untere Öffnung (1b) des Gefäßes (1) durch den Filter (5) geschlossen wird, und einem Druckfedermechanismus (36) zum Vorspannen des Filterblockes (4) aufwärts gegen die vorspannende Kraft der Rückholfeder (37), dadurch gekennzeichnet, daß der Druckfedermechanismus (36) zwischen einem Ende des Drehhebels (35) und dem Filterblock (4) vorgesehen ist und betätigbar ist, wenn der Drehhebel (35) sich dreht, wobei sich sein eines Ende nach oben bewegt.

2. Vorrichtung nach Anspruch 1, wobei das Gefäß ein Zylinder (1) ist.

## Revendications

1. Dispositif d'extraction de boissons d'un distributeur, comprenant une cuve (1) dans laquelle un mélange liquide d'eau chaude et d'une matière en poudre est introduit à travers un orifice d'entrée, une soupape (2) servant à ouvrir et fermer ledit orifice d'entrée de ladite cuve (1), un dispositif de pression (3) servant à introduire de l'air sous pression dans ladite cuve (1), un bloc filtrant (4) qui est agencé au-dessous d'une ouverture inférieure (1b) de ladite cuve (1) et qui est muni d'un filtre (5) dans sa portion supérieure et sollicité vers le bas, relativement à la cuve (1), par un ressort de rappel (37), un mécanisme d'entraînement de bloc filtrant (34), comprenant un levier tournant (35) qui est supporté mobile en rotation de façon que ses extrémités puissent décrire un mouvement montant et descendant, une extrémité pouvant être manoeuvrée pour déplacer le bloc filtrant (4) afin de fermer ladite ouverture inférieure (1b) de ladite cuve (1) avec ledit filtre (5), de sorte que ledit mélange liquide contenu dans ladite cuve (1) est filtré à force à travers ledit filtre (5) par la pression intérieure régnant dans ladite cuve (1) qui est engendrée en introduisant ledit air sous pression dans ladite cuve (1), en même temps qu'on ferme ledit orifice d'entrée (1a) de ladite cuve (1) au moyen de ladite soupape (2) et qu'on ouvre ladite ouverture inférieure (1b) de ladite cuve (1) au moyen dudit filtre (5), et un mécanisme de pression à ressort (36) servant à solliciter ledit bloc filtrant (4) vers le haut à l'encontre d'une force de sollicitation dudit ressort de rappel (37), caractérisé en ce que ledit mécanisme de pression à ressort (36) est disposé entre ladite première extrémité dudit levier tournant (35) et ledit bloc filtrant (4) et peut entrer en action lorsque ledit levier tournant (35) tourne de manière que ladite première extrémité s'élève.

2. Dispositif selon la revendication 1, dans lequel ladite cuve est un cylindre (1).
